# EUROPÄISCHE PATENTSCHRIFT

(11) **EP 0 344 456 B1**
(45) Veröffentlichungstag und Bekanntmachung des Hinweises auf die Patenterteilung: **22.12.1993**
(21) Anmeldenummer: 89107402.3
(22) Anmeldetag: 24.04.1989
(51) Int. Cl.: C12C 9/04, C12C 13/04

(54) **Whirlpool**
Whirlpool
Whirlpool

(30) Priorität: 02.05.1988 DE 8805811 U
(43) Veröffentlichungstag der Anmeldung: 06.12.1989
(73) Patentinhaber: Anton Steinecker Maschinenfabrik GmbH, D-85318 Freising (DE)
(72) Erfinder: Widhopf, Martin, D-8050 Freising (DE)
(74) Vertreter: Grünecker, Kinkeldey, Stockmair & Schwanhäusser Anwaltssozietät

(56) Entgegenhaltungen:
- DE-A- 2 211 660
- DE-A- 2 422 829
- DE-C- 548 187
- FR-A- 650 255
- FR-A- 2 099 350

## Beschreibung

Die Erfindung betrifft einen Whirlpool für die Heißtrubabscheidung aus der Würze beim Brauen von Bier mit einem kreisrunden Behälter, dessen Durchmesser etwa 2,0 bis 3,5 mal so groß wie seine Flüssigkeitshöhe ist und der einen Boden aufweist, auf dessen mittigen Bereich Düsen zum Abführen des dort abgelagerten Trubs zu dem äußeren Randbereich des Bodens gerichtet sind.

Bei einem Whirlpool mit einem Behälter des betrachteten Größenverhältnisses von Durchmesser zu Höhe lagert sich im mittigen Bereich des Behälterbodens der Trub kegelförmig ab. Zum Austragen des Trubs ist aus der DE-A-2 211 660 wenigstens eine am Boden des Setzbottichs rotierend angeordnete, in einer wesentlich horizontalen Ebene einen Wasserstrahl ausstoßende Düse bekannt. Diese Einrichtung ist in unmittelbarer Bodennähe mittig angeordnet und spült den Trub radial nach außen zu dem Randbereich des Bodens, wo im allgemeinen eine Rinne zur Aufnahme des Trubs ausgebildet ist. Von dort wird der Trub in bekannter Weise ausgefördert. Die Düse wird dabei elektrisch oder hydraulisch gedreht.

Bekannt ist ferner aus der FR-A-2 099 350 und DE-A-2 422 829, den Trubkegel über eine Düsenöffnung von einem Zentralrohr anzuströmen. Die Zentralrohre sind dabei entweder (FR-A-2 099 350) so ausgebildet, daß sie durch das ausströmende Wasser in Drehung versetzt werden oder (DE-A-2 422 829) ein zusätzliches festes horizontales Düsenpaar am oberen Rand des Setzbottichs die Drehung aufrecht erhält.

Der Erfindung liegt die Aufgabe zugrunde, einen Whirlpool der eingangs genannten Art so weiterzuentwickeln, daß der Trub wirksamer ausgetragen werden kann.

Zür lösung dieser Aufgabe sieht die Erfindung vor daß mindestens zwei Düsenpaare, die mit Rohrkrümmern versehen sind, oberhalb des Bodens um die Längsmittelachse des Behälters rotierbar angeordnet sind, wobei wenigstens ein Düsenpaar oberhalb eines unteren Düsenpaars angeordnet ist und wobei das untere Düsenpaar zu Beginn des Abführens des Trubs im Trubkegel liegt und einen geringeren Abstand von der Längsmittelachse des Behälters aufweist als das wenigstens eine obere Düsenpaar, und daß eine die Längsmittelachse der Düse enthaltende Ebene zur Vertikalen in einem Winkel geneigt verläuft.

Vorteilhafte Ausgestaltungen der Erfindung sind in den Unteransprüchen beschrieben.

Mit den rotierbaren Düsenpaaren läßt sich erheblich wirkungsvoller der abgelagerte Trub lösen und zum Randbereich des Bodens abführen, da die Düsenpaare kontinuierlich auf einen zugehörigen Ringabschnitt des Trubkegels einwirken. Es sind zwei Düsenpaare, jedoch auch bis zu sechs Düsen angeordnet, wodurch der Wirkungsgrad weiter verbessert wird. Ein Düsenpaar mit einer größeren Reichweite, d.h. also mit einem größeren Abstand zur Längsmittelachse, liegt oberhalb eines zweiten, unteren Düsenpaares, dessen Reichweite geringer ist. Das untere Düsenpaar liegt innerhalb des Trubkegels. Durch die unterschiedliche Reichweite der Düsen kann der gesamte Trubkegel wirkungsvoll ausgespült werden.

Nach einem weiteren Vorschlag der Neuerung sind die Düsen mit Rohrkrümmern versehen. Die die Längsmittelachse der Düsen enthaltende Ebene sollte zu einer die Längsmittelachse des Behälters enthaltenden vertikalen Ebene in einem Winkel geneigt verlaufen. Bei dieser Anordnung drehen sich die Düsen, wenn Wasser oder ein Trub-Wassergemisch durch die Düsen eingespritzt wird, selbsttätig nach Art eines Wasserrades, d.h., daß zum Antrieb der Düsen keine gesonderte Antriebseinrichtung erforderlich ist.

Gemäß der Neuerung wird weiter vorgeschlagen, daß die Düsen schwenkbar befestigt sind, so daß der Winkel der ihre Längsmittelachse enthaltenden Ebene zur Vertikalen einstellbar ist. Damit lassen sich sowohl die Drehzahl, mit der die Düsen umlaufen, als auch der Winkel des auf den Trubkegel auftreffenden Spritzwassers einstellen.

Wenn nach einem weiteren Vorschlag der Neuerung die Düsen unterschiedliche Abstände von der Längsmittelachse des Behälters haben, können die Düsen bei geeigneter Wahl dieser Abstände wirkungsvoll auf den gesamten Trubkegel einwirken. Es können jeweils zwei Düsen diametral gegenüberliegend angeordnet sein, die jeweils den gleichen Abstand von der Längsmittelachse des Behälters haben können.

Wenn es sich bei dem Whirlpool um eine sogenannte Whirlpoolpfanne handelt, bei der am Boden des Behälters ein koaxial zur Längsmittelachse angeordnetes Dampfzuleitungsrohr für einen Innenkocher befestigt ist, ist vorteilhafterweise an der Außenseite dieses Dampfzuleitungsrohres ein Ringkanal ausgebildet, der mit einer Fluidquelle und den Düsen in Verbindung steht. Der Ringkanal kann radial außen von einem ringförmigen U-Profil begrenzt sein, an dem die Düsen befestigt sind. Das U-Profil ist zweckmäßigerweise auf einem ringförmigen Gleitlager drehbar gehalten, das aus Kunststoff, z.B.Teflon, bestehen kann.

Wenn das ringförmige U-Profil aus zwei Halbringen zusammengesetzt ist, erleichtert dies den Zusammenbau der Anordnung und eventuell notwendige Reparaturen.

Wenn der Whirlpool nicht mit einem Innenkocher ausgerüstet ist, wird in einer alternativen Ausgestaltung der Neuerung vorgeschlagen, daß an dem Boden des Behälters koaxial zu dessen Längsmittelachse ein stationäres Flüssigkeitszuleitungsrohr befestigt ist, auf dem ein mit den Düsen versehener drehbarer Rohrabschnitt koaxial angeordnet ist. Das Flüssigkeitszuleitungsrohr, das den Behälterboden durchsetzt, steht dabei mit einer Flüssigkeitsquelle und mit dem oberen Rohrabschnitt in Verbindung, so daß Wasser oder ein Trub-Wasser-Gemisch durch das Flüssigkeitszuleitungsrohr den Düsen zugeführt werden kann.

Vorteilhafterweise liegt der drehbare Rohrabschnitt auf einer Gleitdichtung auf, die am oberen Endabschnitt des stationären Flüssigkeitszuleitungsrohrs angeordnet ist. Zur drehbaren Halterung des aufgesetzen Rohrabschnitts wird ferner vorgeschlagen, daß in dem Flüssigkeitszuleitungsrohr koaxial zu dessen Längsmittelachse ein Führungsdorn befestigt ist, der eine obere Kappe durchgreift, die den drehbaren Rohrabschnitt an dessen oberen Ende verschließt. Zwischen der Kappe und dem Führungsdorn kann ebenfalls eine Gleitdichtung angeordnet sein.

Zur zusätzlichen Stabilisierung des auf dem stationären Flüssigkeitszuleitungsrohr drehbar gehaltenen Rohrabschnitts können an dessen Innenwand radial verlaufende Stege befestigt, vorzugsweise angeschweißt, sein, die sich nahezu bis zu dem Dorn erstrecken und sich an diesem abstützen können.

Die Düsen können an unterschiedlichen Höhen Positionen des drehbaren Rohrabschnitts befestigt sein. Es können in jeder Höhenlage mindestens zwei Düsen vorgesehen sein. Die jeweils höher angeordneten Düsen haben zweckmäßigerweise einen größeren Abstand von der Längsmittelachse des Behälters als die darunter angeordnete Düse (n). Auf diese Weise kann der gesamte Bereich des sich am Boden ausbildenden Trubkegels wirkungsvoll von dem aus den Düsen austretenden Spritzwaser bearbeitet werden.

Die Neuerung wird nachfolgend anhand zweier in der Zeichnung dargestellter Ausführungsbeispiele beschrieben. Dabei zeigen:
- Fig.1: einen Längsschnitt durch den Bereich der drehbaren Düsen eines Whirlpools mit Innenkocher, d.h. einer sogenannten Whirlpoolpfanne;
- Fig.2: eine teilweise geschnittene Aufsicht auf dem Bereich gemäß Fig.1 und
- Fig.3: einen Längsschnitt durch den Bereich der drehbaren Düsen eines Whirlpools ohne Innenkocher.

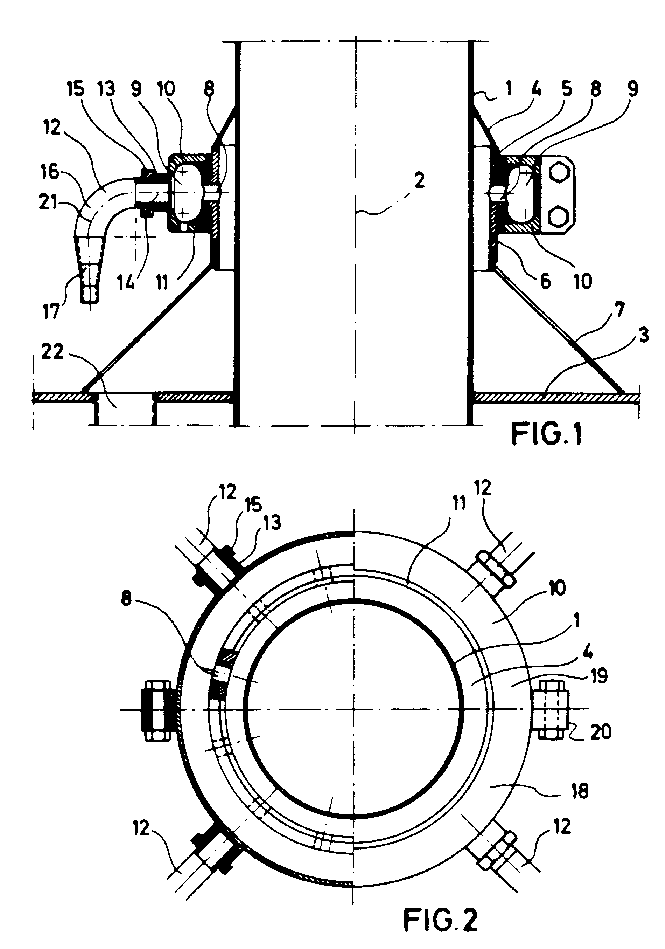

In den Figuren 1 und 2 ist ein Dampfzuleitungsrohr einer Whirlpoolpfanne angedeutet, das koaxial zur Längsmittelachse 2 des nicht dargestellten Behälters der Whirlpoolpfanne angeordnet ist und den Behälterboden 3 durchsetzt. Durch das Dampfzuleitungsrohr 1 wird einem ebenfalls nicht dargestellten Innenkocher vom Boden her Heißdampf zugeführt, um die Würze in dem Innenkocher aufzuheizen.

An der Außenseite des stationären Dampfzuleitungsrohrs 1 ist ein umlaufender Raum abgegrenzt, der durch ringförmige Bleche und Profile 4 bis 7 gegenüber der in dem Behälter befindlichen Würze abgegrenzt ist. Dieser Raum steht über mehrere Öffnungen 8 mit einem Ringraum 9 in Verbindung, der radial außen von einem U-Profil 10 begrenzt ist.

Zwischen dem U-Profil 10 und den ringförmigen Profilen 5 und 6 ist eine Gleitdichtung 11 angeordnet, auf der das U-Profil drehbar gehalten ist und die den Ringraum 9 nach außen fluiddicht abdichtet.

In das U-Profil 10 bzw. in den von diesem begrenzten Ringraum 9 münden vier Düsen 12 ein, die in Umfangsrichtung gleichmäßig voneinander beabstandet sind. Die Düsen 12 sind in Rohrstutzen 13 eingesetzt und darin um eine Achse 14 drehbar gehalten, bis eine Überwurfmutter 15 derart angezogen wird, daß die Düse 12 in der ausgewählten Lage festsitzt.

Die Düse 12 enthält einen Rohrkrümmer 16 und daran anschließend den eigentlichen Düsenkörper 17, der in Richtung des in den Figuren nicht dargestellten, auf dem Behälterboden 3 abgelagerten Trubkegels weist.

Das U-Profil ist aus zwei Halbringen 18 und 19 zusammengesetzt, und zwar mittels zweier Verschraubungen 20.

Die Düsen 12 sind so angeordnet, daß die ihre Längsachse 21 enthaltende Ebene gegenüber der Vertikalen geneigt verläuft. Wenn durch eine Öffnung 22 im Behälterboden 3 Flüssigkeit in den abgeschirmten Raum und von dort dem Ringraum 9 und den Düsen 12 zugeführt wird, dreht sich die aus dem U-Profil 10 und den Düsen 12 gebildete Anordnung selbständig, wobei die Drehgeschwindigkeit durch die Neigung der Düsen 12 einstellbar ist.

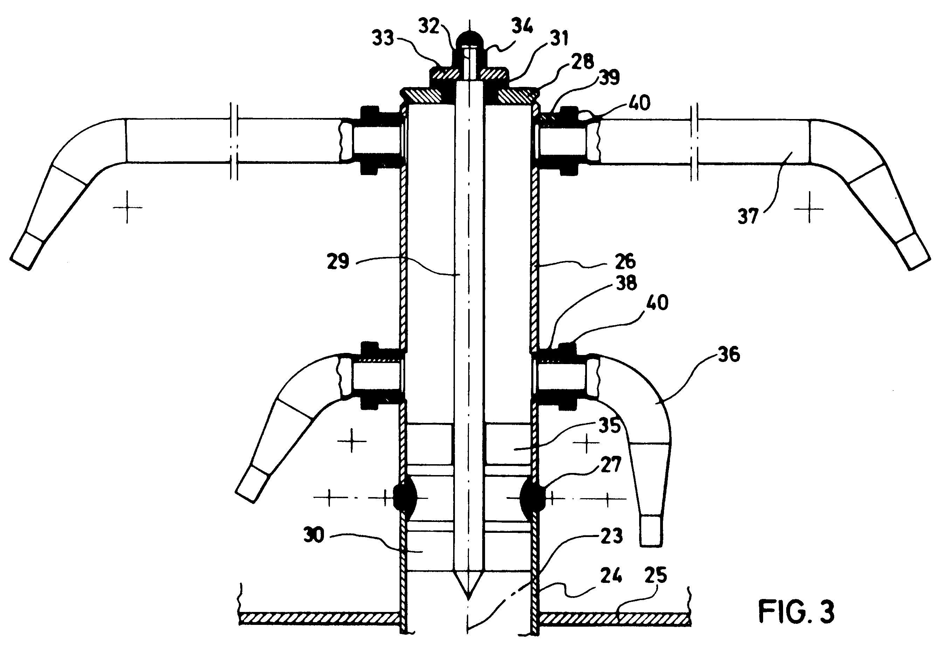

In Figur 3 ist ein Ausschnitt aus einem Whirlpool ohne Innenkocher dargestellt. Koaxial zur Längsmittelachse 23 des nicht dargestellten Behälters dieses Whirlpools ist ein Flüssigkeitszuleitungsrohr 24 in den Behälterboden 25 eingeschweißt, wobei das Flüssigkeitszuleitungsrohr 24 mit einer nicht dargestellten Flüssigkeitsquelle in Verbindung steht. Zwischen einem oberen drehbaren Rohrabschnitt 26 und dem stationären Flüssigkeitszuleitungsrohr 24 ist eine Gleitdichtung 27 angeordnet, die ein glattes Rotieren des Rohrabschnitts 26 ermöglicht und den Innenraum dieser Anordnung nach außen abdichtet. Das obere Ende des Rohrabschnitts 26 ist mittels einer Kappe 28 verschlossen.

Ein Führungsdorn 29 ist mittels radialer Streben 30 an der Innenwand des Flüssigkeitszuleitungsrohres 24 befestigt, indem die Streben 30 sowohl mit dem Flüssigkeitszuleitungsrohr 24 als auch mit dem Dorn 29 verschweißt sind. Der Dorn 29 durchgreift eine zentrale Öffnung der Kappe 28, wobei zwischen dem Dorn 29 und der Kappe 28 eine Gleitdichtung 31 angeordnet ist. Der Dorn 29 hat einen oberen Gewindeabschnitt 32, der eine Abdeckscheibe 33 durchgreift, die mittels einer aufgeschraubten Mutter 34 in Anlage an der Gleitdichtung 31 gehalten ist.

An der Innenwand des Rohrabschnitts 26 sind zur weiteren Stabilisierung radiale Streben 35 angeschweißt, die sich nahezu bis zu dem Dorn 29 erstrecken. Der Dorn 29 gewährleistet die exakte vertikale Lage des drehbar gehaltenen Rohrabschnitts 26.

In zwei verschiedenen Höhenlagen des Rohrabschnitts 26 sind Düsen 36 und 37 befestigt, die in Rohrstutzen 38 und 39 eingreifen und mittels Überwurfmuttern 40 in der ausgewählten Schrägstellung feststellbar sind. Die oberen Düsen 37 haben einen größeren Abstand von der Längsmittelachse 23 als die unteren Düsen 36.

Das in das Flüssigkeitszuleitungsrohr 24 von unten zugeführte Wasser oder Trub-Wasser-Gemisch gelangt vom Innenraum des drehbaren Rohrabschnitts 26 aus in die Düsen 36 und 37, die infolge ihrer Schräglage nach Art eines Wasserrades zusammen mit dem Rohrabschnitt 26 in Drehung versetzt werden.

## Patentansprüche

1. Whirlpool für die Heißtrubabscheidung aus der Würze beim Brauen von Bier, mit einem kreisrunden Behälter, dessen Durchmesser etwa 2,0 bis 3,5 Mal so groß wie seine Flüssigkeitshöhe ist und der einen Boden aufweist, auf dessen mittigen Bereich Düsen zum Abführen des dort abgelagerten Trubs zu dem äußeren Randbereich des Bodens gerichtet sind,
**dadurch gekennzeichnet,**
daß mindestens zwei Düsenpaare (12; 36, 37), die mit Rohrkrümmern (16) versehen sind, oberhalb des Bodens (3; 25) um die Längsmittelachse (2; 23) des Behälters rotierbar angeordnet sind, wobei wenigstens ein Düsenpaar (37) oberhalb eines unteren Düsenpaars (36) angeordnet ist und wobei das untere Düsenpaar zu Beginn des Abführens des Trubs im Trubkegel liegt und einen geringeren Abstand von der Längsmittelachse (2; 23) des Behälters aufweist als das wenigstens eine obere Düsenpaar, und daß eine die Längsmittelachse (21) der Düse (12) enthaltende Ebene zur Vertikalen in einem Winkel geneigt verläuft.

2. Whirlpool nach Anspruche 1,
**dadurch gekennzeichnet,**
daß die Düsenpaare (12; 36, 37) schwenkbar befestigt sind, so daß der Winkel der die Längsmittelachse enthaltenden Ebene zur Vertikalen einstellbar ist.

3. Whirlpool nach einem der Ansprüche 1 und 2,
**dadurch gekennzeichnet,**
daß die jeweils zwei Düsen eines Düsenpaares (12; 36, 37) diametral gegenüberliegend angeordnet sind.

4. Whirlpool nach einem der Ansprüche 1 bis 3,
wobei an dem Boden des Behälters ein koaxial zu dessen Längsmittelachse angeordnetes Rohr für Dampf und Kondensat eines Innenkochers befestigt ist,
**dadurch gekennzeichnet,**
daß an der Außenseite des Dampfzuleitungsrohrs (1) ein Ringkanal (9) ausgebildet ist, der mit einer Fluidquelle und den Düsen (12) in Verbindung steht.

5. Whirlpool nach einem der Ansprüche 1 bis 4,
**dadurch gekennzeichnet,**
daß die Düsen (12) an einem ringförmigen U-Profil (10) befestigt sind, das den Ringkanal (9) radial außen begrenzt.

6. Whirlpool nach einem der Ansprüche 1 bis 5,
**dadurch gekennzeichnet,**
daß das U-Profil (10) auf einem ringförmigen Gleitlager (11) drehbar gehalten ist.

7. Whirlpool nach einem der Ansprüche 1 bis 6,
**dadurch gekennzeichnet,**
daß das ringförmige U-Profil (10) aus zwei Halbringen (18, 19) zusammengesetzt ist.

8. Whirlpool nach einem der Ansprüche 1 bis 3,
**dadurch gekennzeichnet,**
daß an dem Boden (25) des Behälters koaxial zu dessen Längsmittelachse (23) ein stationäres Flüssigkeitszuleitungsrohr (24) befestigt ist, auf dem ein mit den Düsen (36, 37) versehener drehbarer Rohrabschnitt (26) koaxial angeordnet ist.

9. Whirlpool nach Anspruch 8,
**dadurch gekennzeichnet,**
daß der drehbare Rohrabschnitt (26) auf einer Gleitdichtung (27) aufliegt, die am oberen Endabschnitt des stationären Flüssigkeitszuleitungsrohrs (24) angeordnet ist.

10. Whirlpool nach einem der Ansprüche 8 bis 9,
**dadurch gekennzeichnet,**
daß das obere Ende des drehbaren Rohrabschnitts (26) mittels einer Kappe (28) verschlossen ist.

11. Whirlpool nach einem der Ansprüche 8 bis 10,
**dadurch gekennzeichnet,**
daß in dem Flüssigkeitszuleitungsrohr (24) koaxial zu dessen Längsmittelachse (23) ein Führungsdorn (29) befestigt ist, der die Kappe (28) durchgreift.

12. Whirlpool nach einem der Ansprüche 8 bis 11,
**dadurch gekennzeichnet,**
daß zwischen der Kappe (28) und dem Führungsdorn (29) eine Gleitdichtung (31) angeordnet ist.

13. Whirlpool nach einem der Ansprüche 8 bis 12,
**dadurch gekennzeichnet,**
daß an der Innenwand des drehbaren Rohrabschnitts (26) radial verlaufende Stege (35) befestigt sind, die sich nahezu bis zu dem Dorn (29) erstrecken.

14. Whirlpool nach einem der Ansprüche 8 bis 13,
**dadurch gekennzeichnet,**
daß die Düsenpaare (36, 37) an unterschiedlichen Höhenpositionen des drehbaren Rohrabschnitts (26) befestigt sind.

## Claims

1. Whirlpool for separating hot cooler sludge from the wort in the brewing of beer, having a circular receptacle, the diameter of which is around 2.0 to 3.5 times as great as its liquid height and which has a base at whose central region nozzles are directed for evacuating the cooler sludge deposited there to the outer edge region of the base, characterised in that at least two pairs of nozzles (12; 36, 37), which are provided with pipe bends (16), are disposed above the base (3; 25) rotatably about the longitudinal centre axis (2; 23) of the receptacle, at least one pair of nozzles (37) being disposed above a lower pair of nozzles (36) and the lower pair of nozzles being situated, at the start of the evacuation of the cooler sludge, in the cooler sludge cone and being at a lesser distance from the longitudinal centre axis (2; 23) of the receptacle than the at least one upper pair of nozzles, and in that a plane containing the longitudinal centre axis (21) of the nozzle (12) runs inclined at an angle to the vertical.

2. Whirlpool according to Claim 1, characterised in that the pairs of nozzles (12; 36, 37) are pivotably fastened, so that the angle of the plane containing the longitudinal centre axis is adjustable to the vertical.

3. Whirlpool according to one of Claims 1 and 2, characterised in that the respective two nozzles of a pair of nozzles (12; 36, 37) are disposed diametrically opposite each other.

4. Whirlpool according to one of Claims 1 to 3, there being fastened to the base of the receptacle a pipe, disposed coaxially to its longitudinal centre axis, for steam and condensate of an internal boiling apparatus, characterised in that on the outer side of the steam feed pipe (1) there is configured an annular channel (9) which is connected to a fluid source and to the nozzles (12).

5. Whirlpool according to one of Claims 1 to 4, characterised in that the nozzles (12) are fastened to an annular U-section (10) which limits the annular channel (9) radially outwards.

6. Whirlpool according to one of Claims 1 to 5, characterised in that the U-section (10) is held rotatably on an annular slide bearing (11).

7. Whirlpool according to one of Claims 1 to 6, characterised in that the annular U-section (10) is composed of two half-rings (18, 19).

8. Whirlpool according to one of Claims 1 to 3, characterised in that fastened to the base (25) of the receptacle, coaxially to its longitudinal centre axis (23), is a stationary liquid feed pipe (24), on which there is coaxially disposed a rotatable pipe section (26) provided with the nozzles (36, 37).

9. Whirlpool according to Claim 8, characterised in that the rotatable pipe section (26) bears upon a sliding seal (27) which is disposed on the upper end section of the stationary liquid feed pipe (24).

10. Whirlpool according to one of Claims 8 and 9, characterised in that the upper end of the rotatable pipe section (26) is closed off by means of a cap (28).

11. Whirlpool according to one of Claims 8 to 10, characterised in that in the liquid feed pipe (24), coaxially to its longitudinal centre axis (23), there is fastened a guide pin (29) which passes through the cap (28).

12. Whirlpool according to one of Claims 8 to 11, characterised in that between the cap (28) and the guide pin (29) there is disposed a sliding seal (31).

13. Whirlpool according to one of Claims 8 to 12, characterised in that to the inner wall of the rotatable pipe section (26) there are fastened radially running crosspieces (35) which extend almost up to the pin (29).

14. Whirlpool according to one of Claims 8 to 13, characterised in that the pairs of nozzles (36, 37) are fastened at different vertical positions of the rotatable pipe section (26).

## Revendications

1. Whirlpool pour séparer à chaud le dépôt de bac du moût lors de la fabrication de bière, comprenant un réservoir de forme circulaire dont le diamètre est d'environ 2,0 à 3,5 fois plus grand que sa hauteur de liquide et qui comporte un fond vers la zone centrale duquel sont dirigées des buses pour l'évacuation du dépôt de bac accumulé à cet endroit vers la zone latérale du fond, **caractérisé en ce** qu'au moins deux paires de buses (12; 36, 37) munies de raccords coudés (16) sont disposées au-dessus du fond (3; 25) de manière à pouvoir tourner autour de l'axe longitudinal (2; 23) du réservoir, au moins une paire de buses (37) étant installée au-dessus d'une paire de buses inférieure (36), et la paire de buses inférieure se situant, au début de l'évacuation du dépôt de bac, dans le cône de dépôt de bac et à une distance plus faible de l'axe longitudinal (2; 23) du réservoir que la paire de buses supérieure au moins au nombre d'une, et qu'un plan contenant l'axe longitudinal (21) de la buse (12) est incliné par rapport à la verticale.

2. Whirlpool selon la revendication 1, caractérisé en ce que les paires de buses (12; 36, 37) sont fixées de manière pivotante, de sorte que l'angle que le plan contenant l'axe longitudinal forme avec la verticale est réglable.

3. Whirlpool selon l'une des revendications 1 et 2, caractérisé en ce que respectivement deux buses d'une paire de buses (12; 36, 37) sont diamétralement opposées.

4. Whirlpool selon l'une des revendications 1 à 3, un tuyau pour la vapeur et le produit de condensation d'une chaudière intérieure étant fixé sur le fond du réservoir et disposé coaxialement par rapport à l'axe longitudinal dudit réservoir, caractérisé en ce que sur la surface extérieure du tuyau d'arrivée de vapeur (1) est conformé un canal annulaire (9) qui communique avec une source de fluide et avec les buses (12).

5. Whirlpool selon l'une des revendications 1 à 4, caractérisé en ce que les buses (12) sont fixées sur un profil annulaire en U (10) qui délimite le canal annulaire (9) radialement vers l'extérieur.

6. Whirlpool selon l'une des revendications 1 à 5, caractérisé en ce que le profil en U (10) est maintenu de manière tournante sur un palier lisse (11).

7. Whirlpool selon l'une des revendications 1 à 6, caractérisé en ce que le profil annulaire en U (10) est assemblé à partir de deux demi-bagues (18, 19).

8. Whirlpool selon l'une des revendications 1 à 3, caractérisé en ce que sur le fond (25) du réservoir, coaxialement par rapport à l'axe longitudinal (23) de celui-ci, est fixé un tuyau d'arrivée de liquide (24) stationnaire sur lequel une section de tube tournante (26) portant les buses (36, 37) est montée de manière coaxiale.

9. Whirlpool selon la revendication 8, caractérisé en ce que la section de tube tournante (26) repose sur un joint d'étanchéité glissant (27) disposé sur la section terminale supérieure du tuyau d'arrivée de liquide (24) stationnaire.

10. Whirlpool selon l'une des revendications 8 et 9, caractérisé en ce que l'extrémité supérieure de la section de tube tournante (26) est fermée au moyen d'un capuchon (28).

11. Whirlpool selon l'une des revendications 8 à 10, caractérisé en ce que dans le tuyau d'arrivée de liquide (24), coaxialement par rapport à l'axe longitudinal (23) de celui-ci, est fixée une broche de guidage (29) qui traverse le capuchon (28).

12. Whirlpool selon l'une des revendications 8 à 11, caractérisé en ce qu'entre le capuchon (28) et la broche de guidage (29) est disposé un joint d'étanchéité glissant (31).

13. Whirlpool selon l'une des revendications 8 à 12, caractérisé en ce que sur la paroi intérieure de la section de tube tournante (26) sont fixées des nervures radiales (35) qui s'étendent presque jusqu'à la broche (29).

14. Whirlpool selon l'une des revendications 8 à 13, caractérisé en ce que les paires de buses (36, 37) sont fixées à des niveaux différents de la section de tube tournante (26).
